# EUROPEAN PATENT SPECIFICATION

(11) **EP 2 191 180 B1**
(45) Date of publication and mention of the grant of the patent: **26.06.2013**
(21) Application number: 08806187.4
(22) Date of filing: 22.08.2008
(51) Int. Cl.: F16K 27/00, F16K 47/08

(54) **FLUID CONTROL DEVICE**
FLÜSSIGKEITSKONTROLLVORRICHTUNG
DISPOSITIF DE COMMANDE DE FLUIDE

(30) Priority: 22.08.2007 GB 0716363
(43) Date of publication of application: 02.06.2010
(73) Proprietor: Alsitek Limited, Peterborough Cambridgeshire PE1 1SA (GB)
(72) Inventor: LANGAN, Michael, Loughborough Leicestershire LE11 2UA (GB); REID, Michael, Peteborough Cambridgeshire PE1 3PA (GB)
(74) Representative: Thomas, Simon
(86) International application number: PCT/GB2008/002868
(87) International publication number: WO 2009/024799

(56) References cited:
- US-A- 6 095 196
- DAVIDOVITS J ET AL: "GEOPOLYMER: ROOM-TEMPERATURE CERAMIC MATRIX FOR COMPOSITES" CERAMIC ENGINEERING AND SCIENCE PROCEEDINGS, COLUMBUS, US, vol. 9, no. 7 / 08, 1 July 1988 (1988-07-01), pages 835-842, XP000205245 ISSN: 0196-6219

## Description

This invention relates to fluid control devices and in particular, but not exclusively, to the construction of a severe service pressure control valve.

Control valves are used in fluid systems to regulate one or more of: fluid pressure; fluid flow rate; fluid velocity. Control valves vary in size and function depending on the particular application.

Severe service fluid systems are typically large in scale and operate at high pressure, high flow rate and at high velocity and temperature. An example of such an application is a pressure control valve located in the water circulating system of power generating equipment. Such a valve is required to operate at elevated pressure, temperature and flow rate. The resulting fluid mixture of hot oil and sand at elevated pressure and velocity generates an extremely erosive operating environment for the control valve.

Known severe service valve components are typically manufactured from metal materials. However, many metal materials appropriate for severe service applications are high in cost, often due to the limited availability of the mineral reserves required to fabricate the material.

An example of a frequently used material is stainless steel. However, valve components fabricated from stainless steel are especially prone to deterioration following periods of service above 600 degrees Celsius. The components suffer from corrosion and a reduction in physical strength due to known processes which include creep, sensitisation and sigma-phase embrittlement. Embrittlement can also occur during the brazing process required to manufacture the valve.

Materials with improved mechanical properties are available and this partially overcomes this problem, however those materials are expensive to process into the appropriate shapes required for certain severe service applications. An example of such a material is tungsten carbide which has improved mechanical properties over stainless steel but which is significantly more difficult, and accordingly more costly, to form. The hardness that makes tungsten carbide an appropriate material to resist the elevated pressure and temperature of the valve operating environment also makes the material difficult to machine into the required complex shapes of the valve components. Additionally tungsten carbide can be prone to damage by cavitation.

Additionally all metallic materials currently used in these applications suffer from problems of ductile-brittle transition and difficulties in sealing at low temperatures. Such a lack of sealing results in dramatically reduced valve performance as the fluid seeps between the discs rather than travelling along the pathways defined on the disc surface.

It is an object of the present invention to at least mitigate some of the above problems.

According to the invention there is provided a fluid control valve comprising a valve body and a fluid control means wherein the valve body and the fluid control means are formed from a geo-polymer-based material.

The use of a geo-polymer-based fluid control valve will give enhanced fluid control performance and longer life in high and variable temperature applications particularly where temperatures are changing rapidly as the material has a low co-efficient of expansion and better scaling, surface finish and low wear rate.

Preferably, the control means is a valve trim.

Preferably, the valve trim is formed from a plurality of valve trim discs.

Advantageously, geo-polymer-based materials can withstand prolonged use at temperatures in excess of 700 degrees Celsius which extends the life of the disc over discs formed by known manufacturing processes and materials. This is due to the ability of the geo-polymer to operate without deterioration of mechanical properties and to resist corrosion.

A further advantage of the invention is that the manufacturing process for geo-polymer discs allows an increased complexity of flow path to be achieved which in turn improves valve performance.

A yet further advantage of the current invention is that geo-polymer discs can be made at lower cost and with lower embodied energy, that is to say the amount of system energy required to manufacture the disc, than known methods of manufacturing discs.

Preferably, the valve trim disc is formed from a geo-polymer which includes fibre reinforcement to reduce cavitation damage to the disc, in use.

This feature of the invention overcomes the main problem associated with sintered trim discs, that is the brittle nature of the material. Accordingly, this feature of the invention combines the strength and operating advantages of a stainless steel disc with the degree of complexity achievable with a sintered disc. However, in distinction from a sintered disc, a geo-polymer disc eliminates the principal disadvantages of sintering, namely cost and susceptibility to damage by cavitation resulting from the brittle nature of the material.

According to a second aspect of the invention there is provided a valve trim for a fluid control valve, the valve trim comprising two or more valve trim discs of the previous aspect of the invention.

Preferably, the discs are joined with a geo-polymer-based adhesive, more preferably joined and sealed over a substantial part of an engagement surface defined by the discs.

Advantageously, the use of a geo-polymer adhesive enables the discs to be joined and sealed across their entire co-existing flat surface. This gives better valve performance than known steel discs which are brazed together along their outer edge only, since all the fluid remains in the designated fluid pathways. Furthermore there is no risk of sensitisation resulting from the adhesive fixing process. This is not the case with the known brazing process.

Preferably the valve body is formed from a geo-polymer which includes a fibre reinforcement.

More preferably, the fibre reinforcement is aligned so that the deforming forces due to operation of the valve act longitudinally with respect to the fibre.

Preferably the alignment is achieved by the use of a pre-impregnated mat or by controlling the flow of uncured geo-polymer such that the fibres align themselves with the flow direction.

Advantageously this feature improves the maximum allowable internal pressure of the valve.

According to a third aspect of the invention there is provided a valve trim disc formed from a geo-polymer-based material.

The invention will now be described with reference to the accompanying drawings, in which:
Figure 1 is a sectioned side view of a fluid control valve according to the present invention, and
Figure 2 is a partial isometric view of a resistive disc of the valve of Figure 1.

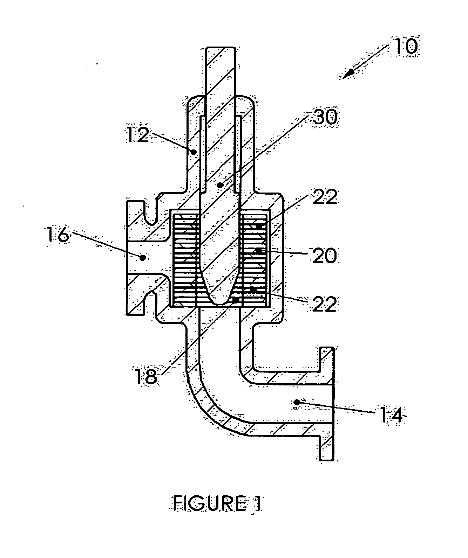

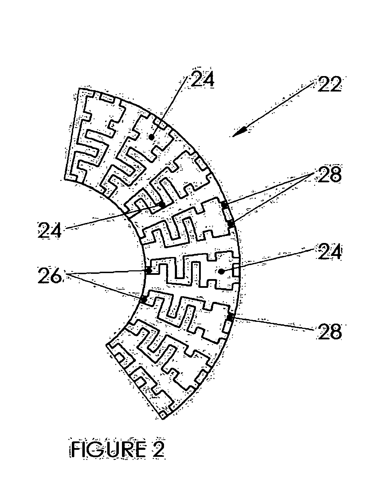

In Figure 1 a fluid velocity control valve 10 is shown having a valve body 12 defining a fluid inlet 14 and outlet 16. Arranged between the inlet 14 and outlet 16 is a cylindrical fluid cavity 18 which has its outer wall defined by the inner surface of a fluid control means in the form of valve disc trim 20. The disc trim 20 comprises a plurality of valve trim means in the form of discs 22 which are shown in more detail in Figure 2.

Referring briefly to Figure 2, each of the discs 22 defines fluid channels 24 having an inlet 26 and at least one outlet 28. Each fluid channel carries the fluid in a radial direction from the cylindrical fluid cavity 18 (see Figure 1) to the outer wall of the valve body 12 as follows:
In use, fluid enters the cylindrical fluid cavity 18 via inlet 14 in an axial direction before passing through the valve disc trim 20 in a radial direction having navigated the fluid channels 24 in the discs 22. The fluid then leaves the valve via outlet 16.

The fluid channels 24 (shown in greater detail in Figure 2) have a complex geometry which enhances the flow control, and which is depicted in Figure 2 by way of example only. The resistance to flow and thus the extent of the pressure drop achievable is dependent upon the number, shape and size of these fluid channels 24.

The flow rate through the valve 10 can be adjusted by varying the position of the cylindrical plunger 30 which is arranged in the cylindrical fluid cavity 18 and which can be raised or lowered to shut off the appropriate number of fluid channels 24 in order to achieve the desired flow rate.

The discs 22 are formed from a geo-polymer which includes a fibrous filler (not shown for clarity) to provide increased strength. The fibrous reinforcement typically takes the form of a finely divided cellulosic material usually derived from plant material. This form of disc construction can advantageously withstand cavitation which can develop when a two-phase flow of a liquid is passing through the valve. The discs 22 are bonded to one another using a geo-polymer adhesive (not shown for clarity). Such a construction affords the valve trim 20 increased low-temperature performance since the geo-polymer material does not suffer from the problems associated with ductile-brittle transition.

The valve body 12 and cylindrical plunger 30 are also formed from a geo-polymer with a fibrous filler. The geo-polymer has its fibres longitudinally aligned with the deforming forces generated during operation of the valve. The alignment is achieved by the use of a pre-impregnated mat or by controlling the flow of uncured geo-polymer such that the fibres align themselves with the flow direction.

The geo-polymer-based material which forms the discs 22, valve body 12 and cylindrical plunger 30 includes a hard filler such as silicon carbide. The filler is retained within the geo-polymer matrix and substantially increases the hardness of the geo-polymer-based material which improves its erosion resistance. Alternatively, or in addition, the geo-polymer-based material includes a resilient filler which is similarly retained within the geo-polymer matrix. The resilient filler, typically an elastomer, acts to disperse the impact energy of entrained particles thereby reducing the erosive potential of those particles.

For the avoidance of doubt a geo-polymer is a material containing large inorganic molecules comprising mostly of aluminium, oxygen and silicon.

## Claims

1. A fluid control valve (10) comprising a valve body (12) and a fluid control means wherein the valve body (12) and the fluid control means are formed from a geo-polymer-based material.

2. The fluid control valve (10) according to claim 1 wherein the fluid control means is a valve trim (20).

3. The fluid control valve (10) according to claim 2 wherein the valve trim (20) is formed from a plurality of valve trim discs (22).

4. The fluid control valve (10) according to claim 3 wherein the valve trim disc (20) is a resistive disc (22) comprising a fluid flow path (24) for enhancing flow control by means of resistance to fluid flow.

5. The fluid control valve (10) according to claim 3 or claim 4 wherein the valve trim discs (22) are bonded with a geo-polymer-based adhesive.

6. The fluid control valve (10) according to any one of claims 3 to 5 wherein the valve trim discs (22) are sealed over a substantial part of an engagement surface defined by the fluid control means.

7. The fluid control valve (10) according to any preceding claim wherein the geo-polymer-based material includes a fibrous material so as to increase the resistance to cavitation damage.

8. The fluid control valve (10) according to any preceding claim wherein the geo-polymer-based material includes a hard or resilient filler to resist erosion of the fluid control means.

9. A valve body (12) for a fluid control valve (10) **characterised in that** the body is formed from a geo-polymer-based material.

10. The valve body (12) according to claim 9 wherein the geo-polymer-based material includes a fibre reinforcement.

11. The valve body (12) according to claim 9 or claim 10 wherein the geo-polymer-based material includes a hard or resilient filler to resist erosion of the body.

## Patentansprüche

1. Fluidsteuerventil (10), das einen Ventilkörper (12) und ein Fluidsteuermittel umfasst, wobei der Ventilkörper (12) und das Fluidsteuermittel aus einem Material auf Geopolymerbasis gebildet sind.

2. Fluidsteuerventil (10) nach Anspruch 1, wobei das Fluidsteuermittel eine Ventilgarnitur (20) ist.

3. Fluidsteuerventil (10) nach Anspruch 2, wobei die Ventilgarnitur (20) aus mehreren Ventilgarniturscheiben (22) gebildet ist.

4. Fluidsteuerventil (10) nach Anspruch 3, wobei die Ventilgarniturscheibe (20) eine Widerstandsscheibe (22) ist, die eine Fluiddurchflussbahn (24) zum Verbessern der Durchflussregelung über Durchflusswiderstand aufweist.

5. Fluidsteuerventil (10) nach Anspruch 3 oder Anspruch 4, wobei die Ventilgarniturscheiben (22) mit einem Klebstoff auf Geopolymerbasis geklebt sind.

6. Fluidsteuerventil (10) nach einem der Ansprüche 3 bis 5, wobei die Ventilgarniturscheiben (22) über einen erheblichen Teil einer von dem Fluidsteuermittel definierten Eingriffsfläche abgedichtet sind.

7. Fluidsteuerventil (10) nach einem der vorherigen Ansprüche, wobei das Material auf Geopolymerbasis ein fasriges Material enthält, um die Beständigkeit gegenüber Kavitationsschäden zu erhöhen.

8. Fluidsteuerventil (10) nach einem der vorherigen Ansprüche, wobei das Material auf Geopolymerbasis einen harten oder elastischen Füllstoff enthält, der Erosion des Fluidsteuermittels widersteht.

9. Ventilkörper (12) für ein Fluidsteuerventil (10), **dadurch gekennzeichnet, dass** der Körper aus einem Material auf Geopolymerbasis gebildet ist.

10. Ventilkörper (12) nach Anspruch 9, wobei das Material auf Geopolymerbasis eine Faserverstärkung beinhaltet.

11. Ventilkörper (12) nach Anspruch 9 oder Anspruch 10, wobei das Material auf Geopolymerbasis einen harten oder elastischen Füllstoff enthält, um Erosion des Körpers zu widerstehen.

## Revendications

1. Vanne de commande de fluide (10) comprenant un corps de vanne (12) et des moyens de commande de fluide, le corps de vanne (12) et les moyens de commande de fluide étant formés à partir d'une matière à base géopolymérique.

2. Vanne de commande de fluide (10) selon la revendication 1, les moyens de commande de fluide étant un mécanisme de vanne (20).

3. Vanne de commande de fluide (10) selon la revendication 2, le mécanisme de vanne (20) étant formé à partir d'une pluralité de disques de mécanisme de vanne (22).

4. Vanne de commande de fluide (10) selon la revendication 3, le disque de mécanisme de vanne (20) étant un disque résistif (22) comportant un trajet d'écoulement de fluide (24) afin d'améliorer la commande de l'écoulement grâce à des moyens de résistance à l'écoulement de fluide.

5. Vanne de commande de fluide (10) selon la revendication 3 ou la revendication 4, les disques de mécanisme de vanne (22) étant liaisonnés à l'aide d'un adhésif à base géopolymérique.

6. Vanne de commande de fluide (10) selon l'une quelconque des revendications 3 à 5, les disques de mécanisme de vanne (22) étant étanchéifiés sur une partie sensible d'une surface de solidarisation laquelle est définie par les moyens de commande de fluide.

7. Vanne de commande de fluide (10) selon l'une quelconque des revendications précédentes, la matière à base géopolymérique englobant une matière fibreuse de sorte à accroître la résistance aux dégâts dus à la cavitation.

8. Vanne de commande de fluide (10) selon l'une quelconque des revendications précédentes, la matière à base géopolymérique englobant une charge dure ou élastique afin d'offrir une résistance à l'érosion des moyens de commande de fluide.

9. Corps de vanne (12) pour une vanne de commande de fluide (10) **caractérisé en ce que** le corps est formé à partir d'une matière à base géopolymérique.

10. Corps de vanne (12) selon la revendication 9, la matière à base géopolymérique englobant un renforcement en fibres.

11. Corps de vanne (12) selon la revendication 9 ou la revendication 10, la matière à base géopolymérique englobant une charge dure ou élastique afin d'offrir une résistance à l'érosion du corps.
